# EUROPÄISCHE PATENTANMELDUNG

(11) **EP 1 591 076 A2**
(43) Veröffentlichungstag der Anmeldung: **02.11.2005**
(21) Anmeldenummer: 05009295.6
(22) Anmeldetag: 28.04.2005
(51) Int. Cl.: A61C 1/00

(54) **Dentale Laser-Behandlungsvorrichtung**

(30) Priorität: 28.04.2004 AT 7302004
(71) Anmelder: W & H Dentalwerk Bürmoos GmbH, 5111 Bürmoos (AT)
(72) Erfinder: Strassl, Martin, 5020 Salzburg (AT); Kasenbacher, Anton, Dr., 83278 Traunstein (DE)

(57) **Zusammenfassung**

Die vorliegende Erfindung betrifft ein Handstück (1), eine Kupplung (20) und eine Vorrichtung (100) mit einer Laserquelle und einem Handstück (1) zur Abgabe von Laserstrahlung (10) für dentalmedizinische Behandlungen. Um eine Schädigung des gesunden Zahngewebes zu vermeiden wird eine verbesserte Bestimmung der Zahntemperatur durch Messung zumindest eines Teils der von der Behandlungsstelle (51) emittierten Wärmestrahlung (12) mittels eines Temperaturfühlers (11), bevorzugt einem Infrarot-Sensor, vorgeschlagen. Bei Erreichen oder Überschreiten eines Temperatur-Schwellenwerts wird die Abgabe von Laserstrahlung (10) auf die Behandlungsstelle (51) unterbrochen oder die Leistungsabgabe der Laserquelle reduziert oder der Anwender durch Abgabe eines akustischen oder visuellen Signals auf das Überschreiten des Schwellenwerts aufmerksam macht. Der Temperaturfühler (11) kann sowohl am Handstück (1) als auch an der Kupplung (20), insbesondere am Kupplungsrohr (21), angeordnet sein.

## Beschreibung

Die vorliegende Erfindung betrifft ein Handstück, eine Kupplung und eine Vorrichtung mit einer Laserquelle und einem Handstück zur Abgabe von Laserstrahlung für dental-medizinische Behandlungen.

Ziel jeder therapeutischen oder diagnostischen Behandlung ist es, neben der eigentlichen medizinischen Aufgabenstellung Nebenwirkungen, wie zum Beispiel Beeinträchtigungen von gesundem Gewebe, zu vermeiden. Im Fall von Zahnbehandlungen mit Laserstrahlung kommt es aufgrund der übertragenen Energie zur Erwärmung des Zahns, wobei auch gesundes Zahnmaterial, das an kariöse Bereiche anschließt, und vor allem die Zahnpulpa mit den darin angeordneten Nervenendigungen betroffen ist. Bei Vorliegen entzündlicher Prozesse können bereits bei einer Pulpatemperatur von 37°C Schmerzattacken ausgelöst werden und bei länger andauernder thermischer Belastung irreversible Schäden bis hin zum kompletten Vitalitätsverlust des behandelten Zahns auftreten.

Trotz des Einsatzes von Kühlmedien, insbesondere Kühlflüssigkeiten oder Kühlluft, ist eine ausreichende Kühlung des die Behandlungsstelle umgebenden gesunden Zahngewebes nicht vollständig gewährleistet. Um eine Schädigung des gesunden Zahngewebes zu vermeiden, wird in der EP 941 707 A2 eine Vorrichtung und eine Methode zur Überwachung der Zahntemperatur offenbart, bei der Betriebsparameter des Lasers, die Behandlungsdauer und Angaben über den zu behandelnden Zahn zur Berechnung der im Zahn herrschenden Temperatur verwendet werden. Nachteilig bei dieser Vorrichtung ist, daß die Ermittlung der Zahntemperatur ausschließlich durch von der Steuervorrichtung ausgeführte Berechnungen, zum Teil auf der Basis von vor der Behandlung einzugebenden Werten, erfolgt und somit kein Bezug zur aktuellen Behandlungssituation am Zahn besteht. Die errechneten Werte liefern dem Anwender daher nur eine ungefähre Einschätzung der Temperaturverhältnisse am behandelten Zahn. Weiters ist die Eingabe von Parametern vor jeder Behandlung für den Anwender zeitaufwendig.

Der vorliegenden Erfindung liegt daher die Aufgabe zugrunde eine Vorrichtung zur Abgabe von Laserstrahlung für dental-medizinische Behandlungen mit einer verbesserten Bestimmung der Zahntemperatur zur Verfügung zu stellen.

Diese Aufgabe wird gemäß der vorliegenden Erfindung durch ein Handstück mit den Merkmalen des Anspruchs 1, durch eine Kupplung nach Anspruch 12 und durch eine Vorrichtung zur Abgabe von Laserstrahlung für dental-medizinische Behandlungen mit den Merkmalen des Anspruchs 15 sowie durch Verfahren gemäß Anspruch 28 und 30 gelöst.

Das erfindungsgemäße Handstück, bei dem es sich je nach Anwendungsbereich um ein gerades Handstück oder ein Winkelstück mit einem abgewinkelten Kopfteil handeln kann, oder die erfindungsgemäße Kupplung sind mit einem Temperaturfühler, bevorzugt einem Infrarot-Sensor, ausgestattet, der die Intensität der vom Zahn und insbesondere vom Gewebe rund um die Behandlungsstelle emittierten Wärmestrahlung (und damit die Temperatur des Gewebes um die Behandlungsstelle) mißt. Die vom Zahn abgegebene Wärmestrahlung liegt in einem Wellenlängenbereich größer 5,0 µm und unterscheidet sich damit ausreichend von der Wellenlänge des Laserstrahls, die 3,5 µm nicht überschreitet. Bevorzugt wird daher ein Temperaturfühler verwendet, dessen Meßbereich eine Wellenlänge von 5,0 µm nicht unterschreitet, so daß keine Gefahr besteht, daß der Temperaturfühler auf die Laserstrahlung reagiert. Alternativ kann dem Temperaturfühler ein Filter, bevorzugt ein Spektralfilter vorgeschalten werden, der Wellenlänge kleiner 5,0 µm ausfiltert.

In einem ersten Ausführungsbeispiel ist der Temperaturfühler außen am Handstück angebracht, bevorzugt am Außenumfang des distalen Endes des Handstücks in unmittelbarer Nähe der Öffnung des Handstücks zur Abgabe der Laserstrahlung. Gemäß einem zweiten, bevorzugten Ausführungsbeispiel ist der Temperaturfühler im Inneren des Handstücks, insbesondere im Strahlengang des Laserstrahlung oder im Inneren der Kupplung angeordnet, wodurch er vor Verschmutzung und Beschädigung besser geschützt ist.

Ist der Temperaturfühler insbesondere in einem Teil des Handstücks / der Kupplung angeordnet, das der Anwender während der Behandlung länger hält, so besteht die Gefahr, daß die Körperwärme des Anwenders die Griffhülse erwärmt und die Eigenstrahlung der Griffhülse die Messung der Wärmestrahlung der Behandlungsstelle beeinflußt und verfälscht. Bevorzugt wird das Handstück und / oder die Kupplung daher mit einer Innenhülse ausgestattet, die im Inneren der Griffhülse angeordnet ist und mit handstückfesten Bauteilen fix verbunden ist. Ein Luftspalt zwischen der Griff- und der Innenhülse dient als Isolator. Zusätzlich kann der Luftspalt zwischen den beiden Hülsen mit einem Laufrad verbunden sein, das bevorzugt in der Steuervorrichtung angeordnet ist und Kühlluft über den Versorgungsschlauch in den Luftspalt fördert. Über eine Öffnung im proximalen Bereich des Handstücks / der Kupplung oder über eine Rückluftleitung im Versorgungsschlauch wird die Wärme konvektiv mit der Kühlluft aus dem Handstück abgeführt und somit die Eigenstrahlung der Griffhülse reduziert.

Zusätzlicher Schutz vor Eigenstrahlung der Griffhülse wird erreicht indem man den Temperaturfühler einhaust, bevorzugt mit einer metallischen Kapsel umgibt, mit einem Durchtrittsfenster aus Zink-Selenid oder Germanium für die Wärmestrahlung und einer Bohrung für die Signalleitung, die mit einer Dichtung, bevorzugt einem O-Ring, gegenüber dem Innenraum des Handstücks abgedichtet ist. Damit ist der Temperaturfühler auch vor direktem Kontakt mit Dampf oder Chemikalien bei der Reinigung oder Desinfektion geschützt.

Grundsätzlich ist die Bestimmung der Temperatur an der Behandlungsstelle auf einen relativ engen Bereich zwischen etwa 37°C (Körpertemperatur eines gesunden Menschen) und etwa 43°C (thermische Reizschwelle der Nerven in der Pulpa) beschränkt. Die diesem Temperaturbereich entsprechenden thermischen Wellenlängen liegen damit in einem Bereich von etwa 9,0 - 9,4 µm. Folglich kann in einem bevorzugten Ausführungsbeispiel der Detektionsbereich des Temperaturfühlers auf 9,0 - 9,4 µm, insbesondere auf 9,10 - 9,35 µm, begrenzt sein bzw. dem Temperaturfühler ein Filter, der Wellenlängen außerhalb dieser Bereiche filtert, vorgeschalten sein.

Mit Hilfe des Verfahrens zur Regelung der Leistungsabgabe einer Laserquelle in einer Vorrichtung zur Abgabe von Laserstrahlung für dental-medizinische Behandlungen mit den Verfahrensschritten
- Abgabe von Laserstrahlung auf eine Behandlungsstelle,
- Messung zumindest eines Teils der von der Behandlungsstelle emittierten Wärmestrahlung mittels eines Temperatürfühlers, bevorzugt einem Infrarot-Sensor,
- Abgabe eines der Intensität der emittierten Wärmestrahlung proportionalen Signals durch den Temperaturfühler,
- Leitung des Signals an und Verarbeitung des Signals durch eine Auswerte- und Steuerelektronik,
- Unterbrechung der Abgabe von Laserstrahlung auf die Behandlungsstelle oder Reduktion der Leistungsabgabe der Laserquelle
wird sichergestellt, daß eine Überhitzung und Schädigung des an die Behandlungsstelle anschließenden gesunden Zahngewebes und der Pulpa während der Behandlung verhindert wird.

Das Verfahren zur Warnung eines Anwenders über das Erreichen oder Überschreiten eines vorgegebenen Temperaturschwellenwerts während einer dentalmedizinischen Behandlung mit den Verfahrensschritten
- Abgabe von Laserstrahlung auf eine Behandlungsstelle,
- Messung zumindest eines Teils der von der Behandlungsstelle emittierten Wärmestrahlung mittels eines Temperaturfühlers, bevorzugt einem Infrarot-Sensor,
- Abgabe eines der Intensität der emittierten Wärmestrahlung proportionalen Signals durch den Temperaturfühler,
- Leitung des Signals an und Verarbeitung des Signals durch eine Auswerte- und Steuerelektronik,
- Erzeugen und Abgabe eines akustischen oder visuellen Signals bei Erreichen oder Überschreiten des Temperaturschwellenwerts durch ein mit der Elektronik verbundenes, elektrisches Akustik- oder Leuchtelement, bevorzugt einer Leuchtdiode
garantiert eine sofortige Alarmierung des Anwenders, wenn kritische Temperaturbereiche erreicht oder überschritten werden. Bevorzugt wird bei Erreichen oder Überschreiten des Temperaturschwellenwerts auch die Abgabe von Laserstrahlung auf die Behandlungsstelle unterbrochen oder die Leistungsabgabe der Laserquelle reduziert.

Ein Verfahren zur intermittierenden Abgabe von Laserstrahlung und Messung der Wärmestrahlung mit den Verfahrensschritten
- Abgabe von Laserstrahlung auf eine Behandlungsstelle,
- Unterbrechung der Abgabe von Laserstrahlung
- Messung zumindest eines Teils der von der Behandlungsstelle emittierten Wärmestrahlung mittels eines Temperaturfühlers, bevorzugt einem Infrarot-Sensor,
- Abgabe eines der Intensität der emittierten Wärmestrahlung proportionalen Signals durch den Temperaturfühler,
- Leitung des Signals an und Verarbeitung des Signals durch eine Auswerte- und Steuerelektronik,
- erneute Abgabe von Laserstrahlung auf eine Behandlungsstelle, wenn der vorgegebene Temperaturschwellenwert nicht erreicht oder überschritten wurde
verringert die Gefahr der Beeinflussung der Detektion der Wärmestrahlung durch den Temperaturfühler insbesondere bei Laserquelle die langwellige Strahlung emittieren, z.B. CO₂-Lasem. Bevorzugt wird bei Erreichen oder Überschreiten des Temperaturschwellenwerts wiederum die Abgabe von Laserstrahlung auf die Behandlungsstelle unterbrochen oder die Leistungsabgabe der Laserquelle reduziert oder ein akustisches oder visuelles Signal erzeugt und abgegeben.

Die Erfindung wird nachfolgend anhand bevorzugter Ausführungsbeispiele und Bezug nehmend auf die beigefügten Zeichnungen erläutert:
- Figur 1: zeigt eine erfindungsgemäße Vorrichtung zur Abgabe von Laserstrahlung für dentalmedizinische Behandlungen.
- Figur 2: zeigt ein erstes Ausführungsbeispiel eines erfindungsgemäßen Handstücks.
- Figur 3: zeigt ein Ausführungsbeispiel einer erfindungsgemäßen Kupplung mit einem Handstück.
- Figur 4: zeigt ein zweites Ausführungsbeispiel eines erfindungsgemäßen Handstücks.
- Figur 5: zeigt ein drittes Ausführungsbeispiel eines erfindungsgemäßen Handstücks.

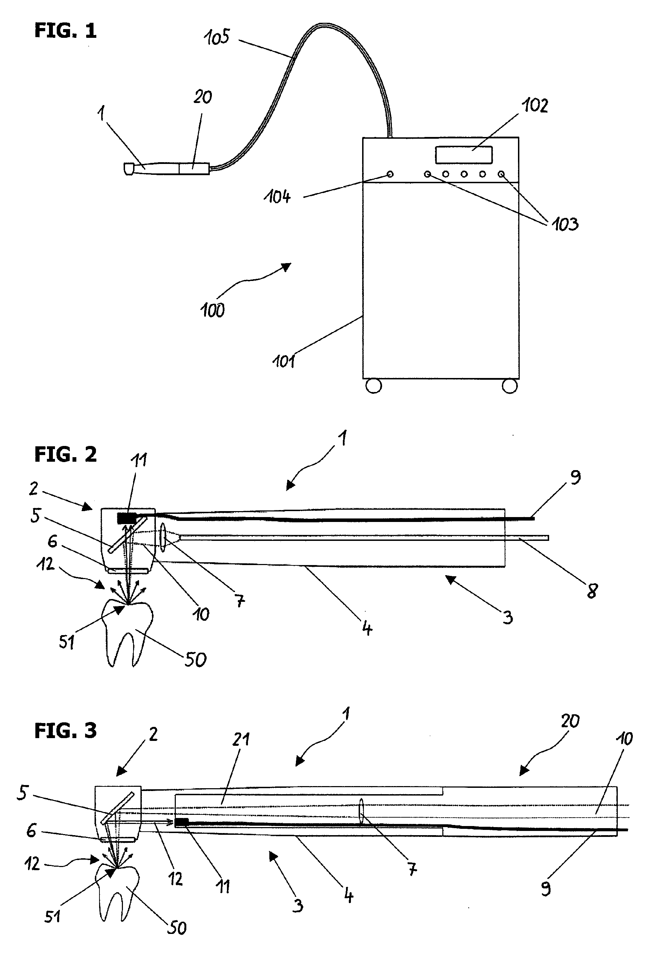

Die erfindungsgemäße Vorrichtung 100 zur Abgabe von Laserstrahlung für dental-medizinische Behandlungen gemäß Figur 1 besteht aus einem Gehäuse 101, in dem die Laserquelle sowie eine Steuervorrichtung mit Auswerte- und Steuerelektronik, bevorzugt als Teil eines Mikroprozessors, angeordnet sind. Die Elektronik dient der Steuerung und Regelung von Betriebsparametern, zum Beispiel der Leistungsabgabe der Laserquelle oder der Mengeneinstellung der Kühlmedien Wasser und Luft, und der Verarbeitung von Signalen von Sensoren, die mit dem Handstück 1 oder der Kupplung 20 verbunden sind. Auf dem mit der Elektronik verbundenen Display 102 kann der Anwender Betriebsdaten ablesen und mit Hilfe von mehreren Tastern 103 Programme auswählen oder Parameter verändern. Über eine Schnittstelle 104 wird die Auswerte- und Steuerelektronik mit einem Drucker zur Ausgabe von Betriebseinstellungen und Behandlungsparametern verbunden. In einem oder mehreren mit der Elektronik verbundenen Speichern sind voreingestellte Betriebsprogramme und veränderbare Einstellungen und Parameter abgelegt bzw. können von dort aufgerufen werden. Ein Versorgungsschlauch 105 mit Leitungen für Kühlflüssigkeit, Kühlluft, einem Lichtleiter für die Laserstrahlung und weiteren Leitungen für die Signalübertragung und die Spannungsversorgung von Beleuchtungsmitteln verbindet die Kupplung 20 und das Handstück 1 mit der im Gehäuse 101 angeordneten Laserquelle, Elektronik und Anschlüssen an externe Strom-, Druckluft- und Flüssigkeitsquellen. Anstelle des Versorgungsschlauchs 105 kann selbstverständlich zur Übertragung der Laserstrahlung auch ein Spiegelgelenkarm vorgesehen sein. Als Laserquelle kann jede Strahlungsquelle, die Laserstrahlung in einem Wellenlängenbereich von 400 nm - 3,5 µm, insbesondere 700 - 1.064 nm, abgibt, verwendet werden.

Das in Figur 2 dargestellte erfindungsgemäße Handstück 1 ist als Winkelstück mit einem Griffteil 3 und einem dazu gewinkelt angeordneten Kopfteil 2 ausgestaltet. Über den Lichtleiter 8, der bis in die Griffhülse 4 des Handstücks 1 reicht, gelangt die Laserstrahlung 10 in den distalen Bereich des Griffteils 3, wo sie aus dem Lichtleiter 8 austritt. Nach dem Durchtritt durch ein optisches Element, zum Beispiel einer Sammellinse 7, wird die Laserstrahlung 10 durch einen im Kopfteil 2 des Handstücks 1 angeordneten Spiegel 5 in Richtung der Austrittsöffnung 6 umgelenkt, verläßt durch die Öffnung 6 das Handstück 1 und trifft auf eine Behandlungsstelle 51 eines zu behandelnden Zahns 50. Um während der Behandlung das Eindringen von Partikeln (ablatiertes Gewebe, Kühlflüssigkeit, etc.) in das Handstück 1 und damit eine Verunreinigung insbesondere des Spiegels 5 und von optischen Elementen 7 zu verhindern, kann in die Austrittsöffnung 6 ein Schutzglas eingebaut sein. Bevorzugt ist das Schutzglas als Linse oder mit sich über den Querschnitt veränderndem Brechungsindex zur Konditionierung der hindurch tretenden Strahlung 10, 12 ausgebildet.

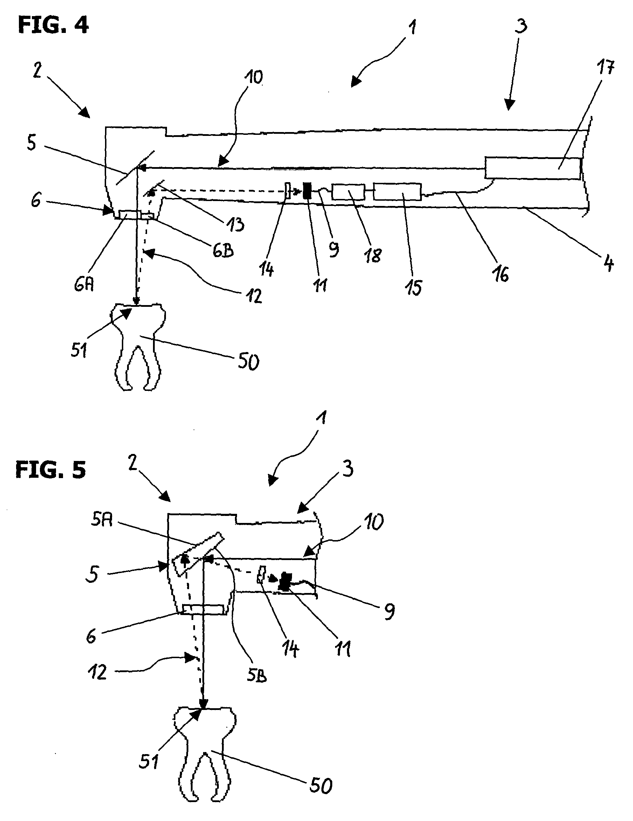

Die mit der Laserstrahlung 10 übertragene Energie führt zu einer Erwärmung des Zahns 50 und insbesondere des Gewebes rund um die Behandlungsstelle 51. Ein Teil dieser Energie wird als Wärmestrahlung 12 (Infrarotstrahlung insbesondere mit einer Wellenlänge größer 5,0 µm) vom Zahn 50 in einen Halbraum abgegeben. Zumindest ein Teil dieser Wärmestrahlung 12 gelangt durch die Öffnung 6 in das Handstück 1 und kann dort von einem Temperaturfühler 11, insbesondere einem Infrarot-Sensor für Wellenlängen größer 5,0 µm, bevorzugt einem Infrarot-Sensor für Wellenlängen im Bereich von 9,0 µm - 9,4 µm, besonders bevorzugt im Bereich von 9,10 µm - 9,35 µm, detektiert werden. Entsprechend der Intensität der Wärmestrahlung 12 (und damit der Temperatur des Gewebes um die Behandlungsstelle 51) erzeugt der Temperaturfühler 11 ein Signal, das über eine Signalleitung 9 zu einer Auswerte- und Steuerelektronik 15 als Teil des Handstücks 1 (siehe Fig. 4), der Kupplung 20 oder der Vorrichtung 100 gelangt. Die Auswerte-und Steuerelektronik, bevorzugt als Teil eines Mikroprozessors in der Vorrichtung 100 ausgeführt, empfängt, verarbeitet und vergleicht die Signale mit einem vorgegebenen Temperaturschwellenwert und unterbricht bei Erreichen oder Überschreiten des Temperaturschwellenwerts die Abgabe der Laserstrahlung 10 auf die Behandlungsstelle, bevorzugt durch Schließen eines Shutters im Strahlengang der Laserstrahlung 10. Alternativ kann die Leistungsabgabe der Laserquelle reduziert werden oder der Anwender durch Abgabe eines akustischen oder visuellen Signals, zum Beispiel durch Aufleuchten einer Warnlampe, auf das Überschreiten des Schwellenwerts aufmerksam gemacht werden.

Der Temperaturschwellenwert (oder ein Temperaturbereich) ist in einem mit der Elektronik verbundenen Speicher abgelegt. Er wird durch den Hersteller der Handstücks 1 oder der Vorrichtung 100 eingegeben. Bevorzugt kann der Anwender den Temperaturschwellenwert jedoch über die Taster 103 (Figur 1) verändern und somit besondere Behandlungserfordernisse, z.B. bei einem bereits entzündeten Zahn durch Absenken des Schwellenwerts, berücksichtigen.

Gemäß Figur 2 ist der Temperaturfühler 11 im Kopf 2 des Handstücks 1 angeordnet, wodurch eine vorteilhafte Nähe des Temperaturfühlers 11 zur Behandlungsstelle 51 und somit zur Quelle der Wärmestrahlung 12 erreicht wird. Bevorzugt ist der Temperaturfühler 11 hinter dem Spiegel 5 und somit außerhalb des Strahlengangs der Laserstrahlung 10 angebracht. Der Spiegel 5 ist als teildurchlässiger Spiegel ausgebildet, der Wellenlänge unter 3,5 µm, bevorzugt unter 1,1 µm, i.e. die Laserstrahlung 10 oder Plasmastrahlung, die durch die Behandlung am Zahn entsteht und zur Auswertung an eine Auswertevorrichtung als Teil der Laser-Behandlungsvorrichtung geleitet wird, reflektiert und für Wellenlängen über 5,0 µm, bevorzugt zwischen 9,0 - 9,4 µm, besonders bevorzugt zwischen 9,10 - 9,35 µm, i.e. die Wärmestrahlung 12, durchlässig ist.

Ist eine Anordnung des Temperaturfühlers 11 im Kopf 2 des Handstücks 1 zum Beispiel aus Platzgründen nicht möglich, so kann der Temperaturfühler 11 im Griffteil 3 positioniert werden. Bevorzugt ist der Temperaturfühler 11 zwischen der distalen Öffnung 6 und dem nächst gelegenen optischen Element für die Laserstrahlung, zum Beispiel einer Linse 7 oder einem Scanner, angeordnet, womit sicher gestellt ist, daß die Eigenschaften des optischen Elements (sowie eventuell weiterer folgender optischer Elemente), zum Beispiel Transmissions- oder Reflexionseigenschaften, ausschließlich auf die Laserstrahlung 10 abgestimmt sein müssen.

Figur 4 zeigt ein Ausführungsbeispiel, bei dem der Temperaturfühler 11 im Griffteil 3 im Strahlengang des Laserstrahls 10 angeordnet ist. Unter dem Begriff Strahlengang wird der Hohlraum zum Durchtritt des Lichtleiters 8 oder der freien Laserstrahlung 10 im Handstück 1 verstanden. Im Unterschied zu Figur 2 ist die Laserquelle 17 hier im Handstück 1 angeordnet, womit ein Lichtleiter 8 zur Übertragung der Laserstrahlung 10 nicht notwendig ist. In die Austrittsöffnung 6 ist ein zweiteiliges Schutzglas 6A, 6B eingebaut, wobei die beiden Schutzgläser 6A, 6B zur Aufbereitung der unterschiedlichen Strahlungen unterschiedliche Eigenschaften, bevorzugt unterschiedliche Brechungsindizes oder unterschiedliche Brennweiten aufweisen oder aus unterschiedlichen Materialien gefertigt sind. Anstelle eines zwei- oder mehrteiligen Schutzglases kann selbstverständlich auch ein einteiliges Schutzglas verwendet werden, das in zwei oder mehrere Bereiche mit unterschiedlichen Eigenschaften unterteilt ist. Die Eigenschaften des Schutzglases 6A sind insbesondere auf die Laserstrahlung 10, die bevorzugt durch Schutzglas 6A hindurch tritt, abgestimmt, bevorzugt ist es aus Quarzglas hergestellt und in Form einer Sammellinse ausgebildet, die die vom Handstück 1 nach außen abgegebene Laserstrahlung 10 bündelt. Schutzglas 6B ist bevorzugt aus Zink-Selenid oder Germanium hergestellt und ebenfalls als Sammellinse ausgeführt, jedoch zur Bündelung der in das Handstück 1 zu leitenden Wärmestrahlung 12.

Über einen Spiegel 13 gelangt die Wärmestrahlung 12 weiter zu einem oder mehreren Filtern 14, wobei Filter 14 beispielsweise ein Resonator (Etalon), Transmissions-, Brechungsfilter (Prisma) oder Beugungsfilter (Gitter) ist. Der Filter 14 filtert Wellenlängen kleiner 5,0 µm, bevorzugt außerhalb des Bereichs von 9,0 - 9,4 µm, insbesondere von 9,10 - 9,35 µm. Die gefilterte Wärmestrahlung 12 gelangt anschließend zum Temperaturfühler 11, der über eine Signalleitung 9 ein der Intensität der Wärmestrahlung 12 entsprechendes Signal an einen im Griffteil 3 angeordneten Verstärker 18 und weiter an eine auf einer Platine angeordneten Auswerte- und Steuerelektronik 15 übermittelt. Die Elektronik 15 ist über eine weitere Signalleitung 16 mit der Laserquelle 17 verbunden und bewirkt bei Erreichen oder Überschreiten eines Temperaturschwellenwerts eine Unterbrechung der Abgabe der Laserstrahlung 10 oder die Reduktion der Leistungsabgabe der Laserquelle 17. Selbstverständlich können zwischen dem Spiegel 13 und dem Temperaturfühler 11 weitere optische Elemente zur Aufbereitung der Wärmestrahlung 12, zum Beispiel Linsen, angeordnet sein. Mit dem Temperaturfühler 11 kann zusätzlich eine Digitalisierungseinheit (Analog-Digital-Wandler) zur Umwandlung des analogen Signals des Temperaturfühlers 11 in ein digitales Signal verbunden sein, wodurch die Weiterleitung des Signals unabhängig von der Stromstärke ist.

Figur 3 zeigt eine an das Handstück 1 angeschlossenen erfindungsgemäße Kupplung 20, die als Verbindung zwischen dem Handstück 1 und der Versorgungsleitung 105 (Figur 1) dient. Die Kupplung 20 ist bevorzugt als Drehkupplung ausgeführt, so daß der Anwender während der Behandlung das Handstück 1 gegenüber der Kupplung 20 und den anschließenden Bauteilen beliebig verdrehen kann. Die Laserstrahlung 10 wird durch den Strahlengang der Kupplung 20 mit optischen Elementen, zum Beispiel einer Linse 7, durch den Strahlengang des Kupplungsrohrs 21 und des distalen Endes des Griffteils 3 auf den Spiegel 5 übertragen. Über den Spiegel 5 wird auch die von der Behandlungsstelle 51 emittierte Wärmestrahlung 12 in den Strahlengang des Laserstrahlung 10 gelenkt. Der weite Reflexionsbereich (etwa 400 nm - 10,60 µm) des Spiegels 5 wird bevorzugt durch eine Mehrfachbeschichtung der Spiegeloberfläche zur selektiven Reflexion bestimmter Wellenlängenbereiche erzielt. Alternativ kann auch ein rein metallischer Spiegel verwendet werden.

Der Temperaturfühler 11 zur Messung der Wärmestrahlung 12 ist auf dem Kupplungsrohr 21, bevorzugt im Strahlengang des Laserstrahlung 10, angebracht. Vorteilhaft bei dieser Anordnung ist, daß mit dem Lösen des Handstücks 1 von der Kupplung 20 der Temperaturfühler 11 aus dem Handstück 1 entfernt wird und das Handstück 1 damit problemlos sterilisiert werden kann. Dies ist insbesondere bei Anwendungen wo Gewebe entfernt wird und gleichzeitig Kühlmedien, insbesondere Kühlflüssigkeiten, zum Einsatz kommen wichtig, da hier die Gefahr besonders groß ist, daß Partikel und Krankheitserreger mit versprühten Flüssigkeitströpfchen in das Handstück 1 eindringen und es dadurch zu Kreuzkontaminationen zwischen Patienten kommen kann. Auch werden bei der Anordnung des Temperaturfühlers 11 auf der Kupplung 20 keine Kontakte, zum Beispiel Schleifkontakte und Schleifringe, benötigt, um die Signale über die Schnittstelle Handstück 1 / Kupplung 20 zu übertragen. Die Weiterleitung und Auswertung des Signals des Temperaturfühlers 11 entspricht der Beschreibung für die Figuren 2 und 4, so daß zur Vermeidung von Wiederholungen darauf nicht mehr eingegangen wird.

Die Länge des Kupplungsrohrs 21 ist bevorzugt so bemessen, daß das distale Ende des Kupplungsrohrs 21 bis in die Nähe des Kopfs 2 des Handstücks 1 reicht und der Temperaturfühler 11 im distalen Bereich des Kupplungsrohrs 21 angeordnet ist. Dadurch wird wiederum eine möglichst große Nähe des Temperaturfühlers 11 zur Behandlungsstelle 51 und somit zur Quelle der Wärmestrahlung 12 erreicht, und eine mit der Wegstrecke zunehmende Abschwächung und Streuung der Wärmestrahlung 12 verringert.

Anstelle der zwei Spiegel 5, 13 wird in dem in Figur 5 dargestellten Handstück 1 nur ein Spiegel 5 verwendet. Der Spiegel 5 hat eine Vorderseite 5B (i.e. eine der Laserlichtquelle nahe Seite) und eine Rückseite 5A (i.e. eine von der Laserlichtquelle entfernte Seite). Die beiden Seiten 5A, 5B sind mit unterschiedlichen Materialien beschichtet, so daß selektiv jeweils nur eine der beiden Strahlungen 10, 12 von einer der beiden Seiten 5A, 5B reflektiert wird. In Figur 5 reflektiert beispielhaft die Vorderseite 5B Strahlung unter 3,5 mm (Laserstrahlung 10) und läßt die Strahlung über 5,0 µm (Wärmestrahlung 12) passieren, so daß diese von der Rückseite 5A reflektiert wird. Dadurch wird eine Strahltrennung erreicht und Wärmestrahlung 12 auf den seitlich im Strahlengang des Laserlichts 10 angeordneten Temperaturfühler 11 abgelenkt. Um die Ablenkung zu verstärken, werden die beiden reflektierenden Seiten 5A, 5B antiparallel angeordnet.

Die Erfindung ist nicht auf die beschriebenen Ausführungsbeispiele beschränkt, sondern umfaßt alle Ausführungsmöglichkeiten, die das prinzipielle, sinngemäßen Funktionsprinzip der Erfindung nicht verändern.

## Patentansprüche

1. Handstück (1) zur Abgabe von Laserstrahlung (10) für dental-medizinische Behandlungen,
**dadurch gekennzeichnet, daß**
am Handstück (1) ein Temperaturfühler (11), bevorzugt ein Infrarot-Sensor zur Detektion von Wärmestrahlung (12), die vom behandelten Zahn (50, 51) emittiert wird, angeordnet ist.

2. Handstück (1) nach Anspruch 1, **dadurch gekennzeichnet, daß**
der Temperaturfühler (11) am Außenumfang des distalen Endes des Handstücks (1) in unmittelbarer Nähe der Öffnung (6) des Handstücks (1) angeordnet ist.

3. Handstück (1) nach Anspruch 1, **dadurch gekennzeichnet, daß**
der Temperaturfühler (11) im Inneren des Handstücks (1) angeordnet ist.

4. Handstück (1) nach Anspruch 3, **dadurch gekennzeichnet, daß**
das Handstück (1) einen abgewinkelten Kopf (2) hat, in dem ein teildurchlässiger Spiegel (5) zum Umlenken zumindest der Laserstrahlung (10) angeordnet ist, daß der Temperaturfühler (11) an der Rückseite des Spiegels (5) angeordnet ist und daß der Spiegel (5) für die Wärmestrahlung (12) durchlässig ist.

5. Handstück (1) nach Anspruch 3, **dadurch gekennzeichnet, daß**
der Temperaturfühler (11) im Strahlengang des Laserstrahls (10) angeordnet ist.

6. Handstück (1) nach Anspruch 5, **dadurch gekennzeichnet, daß**
der Temperaturfühler (11) zwischen der distalen Öffnung (6) des Handstücks (1) und dem nächst gelegenen optischen Element (7) für die Laserstrahlung (10) angeordnet ist.

7. Handstück (1) nach Anspruch 5 oder 6, **dadurch gekennzeichnet, daß**
das Handstück (1) einen abgewinkelten Kopf (2) hat, in dem ein Spiegel (5) zum Umlenken zumindest der Laserstrahlung (10) angeordnet ist, und daß der Spiegel (5) einen Reflexionsbereich von ungefähr 400 nm -10,60 µm hat, um auch die vom Zahn (50, 51) emittierte Wärmestrahlung (12) auf den Temperaturfühler (11) zu lenken.

8. Handstück (1) nach Anspruch 7, **dadurch gekennzeichnet, daß**
der Spiegel (5) eine Vorder- und eine Rückseite (5A, 5B) mit unterschiedlichen Beschichtungen zur selektiven Reflexion der Laserstrahlung (10) und der Wärmestrahlung (12) hat.

9. Handstück (1) nach Anspruch 8, **dadurch gekennzeichnet, daß**
die Vorder- und Rückseite (5A, 5B) antiparallel angeordnet sind.

10. Handstück (1) nach Anspruch 5 oder 6, **dadurch gekennzeichnet, daß**
im Handstück ein erster Spiegel (13) zum Umlenken der vom Zahn (50, 51) emittierten Wärmestrahlung (12) auf den Temperaturfühler (11) angeordnet ist.

11. Handstück (1) nach Anspruch 10, **dadurch gekennzeichnet, daß**
im Kopf (2) ein zweiter Spiegel (5) zum Umlenken zumindest der Laserstrahlung (10) angeordnet ist.

12. Handstück (1) nach einem der Ansprüche 1 -11 **gekennzeichnet durch**
ein Schutzglas in der distalen Öffnung (6) des Handstücks (1), wobei das Schutzglas als Linse oder als Schutzglas mit sich über den Querschnitt veränderndem Brechungsindex ausgebildet ist.

13. Handstück (1) nach Anspruch 12, **dadurch gekennzeichnet, daß**
das Schutzglas in mehrere Bereiche unterteilt ist oder aus mehreren separaten Teilen (6A, 6B) besteht, die unterschiedliche Brechungsindizes oder unterschiedliche Brennweiten aufweisen oder aus unterschiedlichen Materialien gefertigt sind.

14. Kupplung (20) zur Verbindung eines Handstück (1) zur Abgabe von Laserstrahlung (10) mit einer Laserquelle **dadurch gekennzeichnet, daß**
an der Kupplung (20) ein Temperaturfühler (11), bevorzugt ein Infrarot-Sensor, angeordnet ist.

15. Kupplung (20) nach Anspruch 14, **dadurch gekennzeichnet, daß**
der Temperaturfühler (11) am Kupplungsrohr (21) angeordnet ist.

16. Kupplung (20) nach Anspruch 15, **dadurch gekennzeichnet, daß**
die Länge des Kupplungsrohrs (21) so bemessen ist, daß, wenn die Kupplung (20) an das Handstück (1) gekuppelt ist, das distale Ende des Kupplungsrohrs (21) bis in die Nähe des Kopfs (2) des Handstücks (1) reicht und der Temperaturfühler (11) im distalen Bereich des Kupplungsrohrs (21) angeordnet ist.

17. Handstück (1) oder Kupplung (20) nach einem der vorhergehenden Ansprüche, **gekennzeichnet durch**
einen Filter (14) und / oder ein optisches Element (7) zur Aufbereitung der vom Zahn (50, 51) emittierten Wärmestrahlung (12) vor dem Auftreffen auf dem Temperaturfühler (11).

18. Handstück (1) oder Kupplung (20) nach Anspruch 17, **gekennzeichnet durch**
einen oder mehrere Spektralfilter (14), der / die Wellenlängen außerhalb eines Bereichs von 9,0 µm -9,4 µm, insbesondere außerhalb eines Bereichs von 9,10 µm -9,35 µm, filtert / filtern.

19. Handstück (1) oder Kupplung (20) nach einem der vorhergehenden Ansprüche, **dadurch gekennzeichnet, daß**
der Temperaturfühler (11) Wellenlängen über 5,0 µm, bevorzugt Wellenlängen im Bereich von 9,0 µm -9,4 µm, insbesondere im Bereich von 9,10 µm -9,35 µm, detektiert.

20. Handstück (1) oder Kupplung (20) nach einem der vorhergehenden Ansprüche, **gekennzeichnet durch**
eine Innenhülse im Handstück (1) oder der Kupplung (20), die von der Griffhülse (4) **durch** einen Luftspalt getrennt ist, zur Abschirmung des Temperaturfühlers (11) vor über die Griffhülse (4) abgestrahlter Wärmestrahlung.

21. Handstück (1) oder Kupplung (20) nach Anspruch 20, **dadurch gekennzeichnet, daß**
der Luftspalt mit einem Laufrad verbunden ist, das Kühlluft in den Luftspalt fördert, wodurch die von der Griffhülse (4) abgestrahlte Wärmestrahlung konvektiv mit der Kühlluft aus dem Handstück (1) / der Kupplung (20) abführbar ist.

22. Handstück (1) oder Kupplung (20) nach einem der vorhergehenden Ansprüche, **dadurch**
**gekennzeichnet, daß**
der Temperaturfühler (11) in einer Kapsel mit einem Fenster aus Zink-Selenid oder Germanium eingehaust ist.

23. Vorrichtung (100) zur Abgabe von Laserstrahlung für dental-medizinische Behandlungen mit einer Laserquelle, einer Kupplung (20), einem Handstück (1) und einem Lichtleiter zur Leitung der Laserstrahlung (10) von der Laserquelle zur Kupplung (20) und zum Handstück (1),
**gekennzeichnet durch**
ein Handstück (1) oder eine Kupplung (20) nach einem der Ansprüche 1 -22.

24. Handstück (1), Kupplung (20) oder Vorrichtung (100) nach einem der vorhergehenden Ansprüche, **gekennzeichnet durch**
einen Verstärker (18), der die vom Temperaturfühler (11) abgegebenen Signale verstärkt.

25. Handstück (1), Kupplung (20) oder Vorrichtung (100) nach einem der vorhergehenden Ansprüche, **dadurch gekennzeichnet, daß**
der Temperaturfühler (11) mit einer Digitalisierungseinheit verbunden ist, die das analoge Signal des Temperaturfühlers (11) in ein digitales Signal umwandelt.

26. Handstück (1), Kupplung (20) oder Vorrichtung (100) nach einem der vorhergehenden Ansprüche, **gekennzeichnet durch**
eine Auswerte- und Steuerelektronik, bevorzugt als Teil eines Mikroprozessors, die Signale vom Temperaturfühler (11) empfängt, verarbeitet und bei Oberschreiten eines TemperaturSchwellenwerts die Abgabe von Laserstrahlung (10) auf die Behandlungsstelle (50, 51) unterbricht oder die Leistungsabgabe der Laserquelle reduziert oder den Anwender **durch** Abgabe eines akustischen oder visuellen Signals auf das Überschreiten des Schwellenwerts aufmerksam macht.

27. Handstück (1), Kupplung (20) oder Vorrichtung (100) nach Anspruch 26, **dadurch**
**gekennzeichnet, daß**
die Auswerte- und Steuerelektronik mit einer Anzeige (102) und / oder einer Schnittstelle (104) für einen Drucker und / oder einem Speicher verbunden ist, auf der / dem einzelne oder mehrere Temperaturwerte einer Behandlung numerisch oder graphisch darstellbar bzw. ausdruckbar bzw. speicherbar sind.

28. Verfahren zur Warnung eines Anwenders über das Erreichen oder Überschreiten eines Temperaturschwellenwerts während einer dentalmedizinischen Behandlung, **gekennzeichnet durch** die Verfahrensschritte
- Abgabe von Laserstrahlung (10) auf eine Behandlungsstelle (50, 51),
- Messung zumindest eines Teils der von der Behandlungsstelle (50, 51) emittierten Wärmestrahlung (12) mittels eines Temperaturfühlers (11), bevorzugt einem Infrarot- Sensor,
- Abgabe eines der Intensität der emittierten Wärmestrahlung (12) proportionalen Signals **durch** den Temperaturfühler (11),
- Leitung des Signals an und Verarbeitung des Signals **durch** eine Auswerte- und Steuerelektronik,
- Erzeugen und Abgabe eines akustischen oder visuellen Signals bei Erreichen oder Oberschreiten des Temperaturschwellenwerts.

29. Verfahren nach Anspruch 28, **dadurch gekennzeichnet, daß**
bei Erreichen oder Überschreiten des Temperaturschwellenwerts die Abgabe von Laserstrahlung (10) auf die Behandlungsstelle (50, 51) unterbrochen oder die Leistungsabgabe der Laserquelle reduziert wird.

30. Verfahren zur Regelung der Leistungsabgabe einer Laserquelle in einer Vorrichtung (100) zur
Abgabe von Laserstrahlung für dental-medizinische Behandlungen, **gekennzeichnet durch** die Verfahrensschritte
- Abgabe von Laserstrahlung (10) auf eine Behandlungsstelle (50, 51),
- Messung zumindest eines Teils der von der Behandlungsstelle (50, 51) emittierten Wärmestrahlung (12) mittels eines Temperaturfühlers (11), bevorzugt einem Infrarot- Sensor,
- Abgabe eines der Intensität der emittierten Wärmestrahlung proportionalen Signals **durch** den Temperaturfühler (11),
- Leitung des Signals an und Verarbeitung des Signals **durch** eine Auswerte- und Steuerelektronik,
- Unterbrechung der Abgabe von Laserstrahlung (10) auf die Behandlungsstelle (50, 51) oder Reduktion der Leistungsabgabe der Laserquelle.
